# EUROPEAN PATENT APPLICATION

(11) **EP 0 817 492 A2**
(43) Date of publication of application: **07.01.1998**
(21) Application number: 97110510.1
(22) Date of filing: 26.06.1997
(51) Int. Cl.: H04N 7/26, H04N 7/50

(54) **Parallel video decoder**

(30) Priority: 28.06.1996 JP 169144/96
(71) Applicant: MATSUSHITA ELECTRIC INDUSTRIAL CO., LTD., Kadoma-shi, Osaka 571 (JP)
(72) Inventor: Siong, Khor Chee, Singapore 520461 (SG)
(74) Representative: Grünecker, Kinkeldey, Stockmair & Schwanhäusser Anwaltssozietät

(57) **Abstract**

A multiple-video-decoders system has :
memory means for buffering video bitstream received from a transmission channel;
header detection means, coupled to said memory means, for detecting header code in the said video bitstream,
synchronizing means, coupled to the said header detection means, for executing synchronizing of the bitstream, video vertical sync and display signal ;
multiple video decoding modules having a bitstream buffer, video decoder connected to the bitsstream buffer for reconstructing pictures from the video bitstream and decoded video output buffer connected to the video decoder;
transmitting means for multiplexing the input video bitstream from the memory buffer and transferring the multiplexed video bitstream into selected said bitstream buffer of the said multiple video decoders;
a display buffer coupled to the multiple decoded video output buffers.

## Description

### BACKGORUND OF THE INVENTION

### 1.Field of the Invention

The present invention relates generally to a progressive video decoding apparatus for synchronizing the progressive video decoder to the compressed digitized video signal.

### 2.Related art of the Invention

Currently, there is no known system that is using multiple video decoders for decoding compressed progressive video. Therefore, there is no known prior art on the synchronization of multiple video decoders in a progressive decoder system.

As described above, there lies a problem in that there is no proper synchronization method currently existing for a multiple video decoders system. For a continuous and seamless picture display sequence, the progressive video sync signal used must be synchronized with the input video bitstream from the transmission channel.

The operations of the video decoders must also be properly synchronized to the video bitstream and the progressive video sync signal for input and output purposes. Any improper synchronization will cause underflow or overflow in the video decoders, break in pictures or total system breakdown.

### SUMMARY OF THE INVENTION

For the purpose of solving the above described problem, a synchronizing progressive video decoder system according to the present invention comprises means for transmission buffering video bitstream received from a transmission channel, means for detecting header code in the said bitstream, means for synchronizing of the bitstream, video vertical sync and display, multiple video decoding modules consisting of a bitstream buffer, video decoder and decoded video output buffer, means for multiplexing the input video bitstream from the transmission buffer and transferring the multiplexed video bitstream into the selected said bitstream buffer of the said multiple video decoders, means for reconstructing the pictures by multiple video decoders from the said video bitstream, a display buffer having the input coupled to the multiple video decoding modules, means for selection of the bitstream buffers and video decoders and means for multiplexing the decoded video buffers output to the display buffer.

That is the progressive video decoder synchronizes to the input video bitstream from the transmission channel by initiating processing through the detection of sequence start headers of GOP headers from the input video bitstream. The video syncs generator is then enabled and synchronized with the input video bitstream. Activation and deactivation of any of the multiple interlace video decoders is synchronized with the detection of the input video bitstream. Output buffers that are closely coupled to each of the interlace video decoders also have the read and write operations synchronized to each of the interlace video decoders and at the same time synchronized to the progressive video syncs to display seamless moving pictures.

For example each video decoder processes one of three GOP including 30 frames . The GOP comes once every 0.5 second as a bitstream. Each decoder needs about one second for processing such GOP. Further the decoder needs to access the
frames before and after the 30 frames ,and then it is preferable to use three decoders.

Thus by the above described method, the present invention produces a progressive video decoder system which is capable of synchronizing the input video bitstream with the progressive video sync signal, operations of each of the multiple video decoders with the progressive video sync signals and output of the video decoders with the sync signal.

### BRIEF DESCRIPTION OF THE DRAWINGS

Figure 1 is a block diagram of a novel synchronization scheme in one embodiment according to the present invention.

Figure 2 is a flow diagram showing the synchronizing processing,

Figure 3 shows the status of the bitstream buffers, video decoders and decoded buffers synchronized with the GOP header detection.

Figure 4 shows the status of the video decoders and decoded buffers output during an abnormal GOP sequence.

### PREFERRED EMBODIMENTS

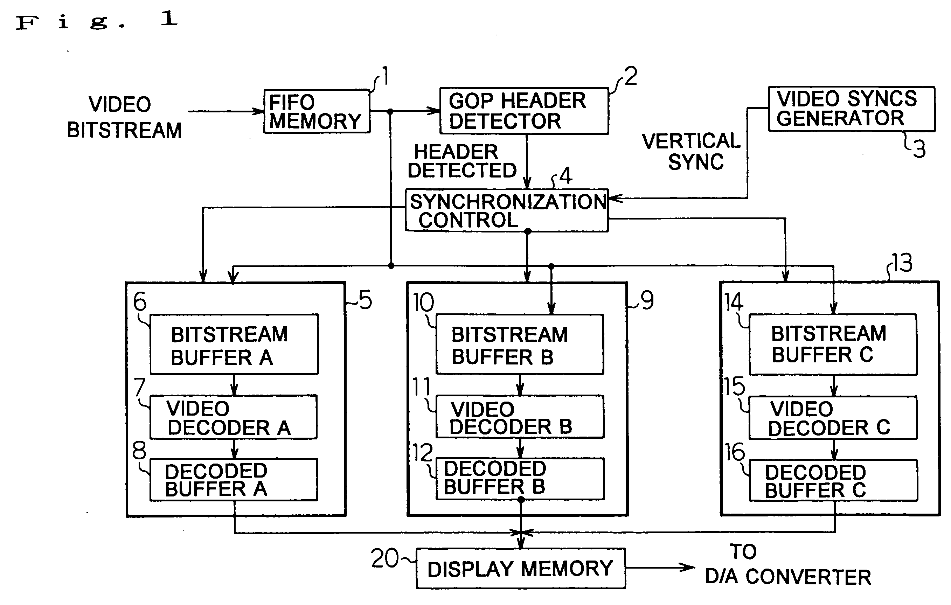

With reference to the drawings, embodiments of the synchronization scheme will be explained hereinafter. Figure 1 shows the configuration of the synchronization scheme for the multiple decoders system. As the video bitstream comes in from a transmission channel, it is buffered by the FIFO memory 1. The FIFO memory 1 buffers the input data so that the Group Of Pictures(GOP) header detector 2 module can control the input bitstream and therefore allows the bitstream input to be multiplexed correctly to the bitstream buffers 6,10,14 in decoder A 5, decoder B 9 and decoder C 13.

The GOP header detector 2 monitors the input bitstream and check for GOP headers. When a GOP header is detected, the GOP header detector 2 will indicate to the synchronization control 4. Assuming, in this case, each GOP contains 30 coded picture frames and the vertical sync occurs 60 times every second, the GOP detector 2 should detect two GOP headers per second in the bitstream. As each of the video decoder 7, 11 and 15 can only decode 30 frames per second, the bitstream input must be multiplexed and synchronized correctly. Due to the structure of the coded bitstream, about 31 frames is required by each decoder system 5,9,13 for proper decoding of the bitstream..

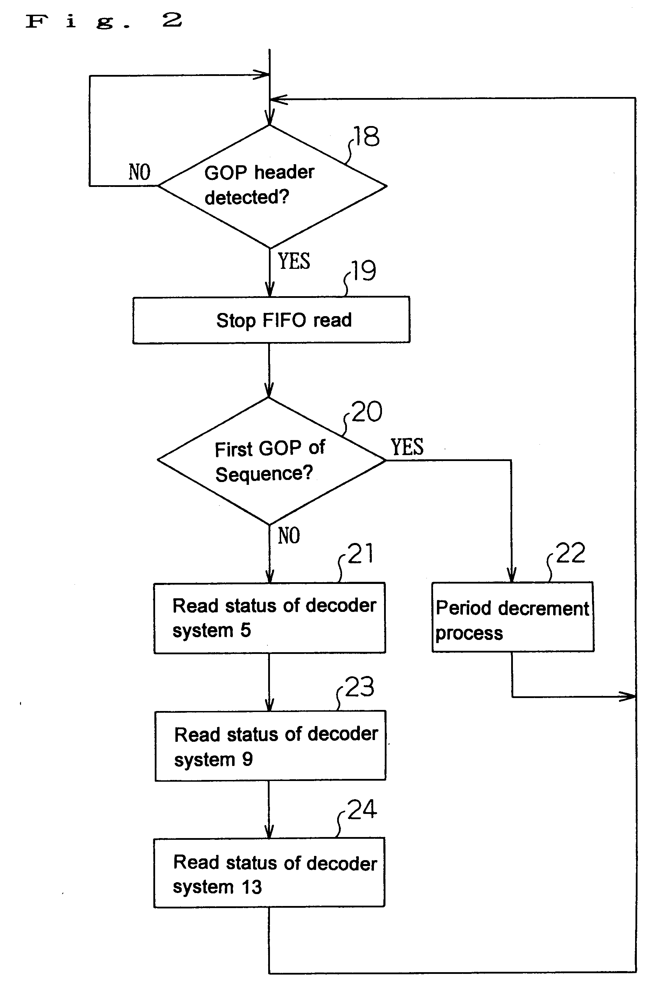

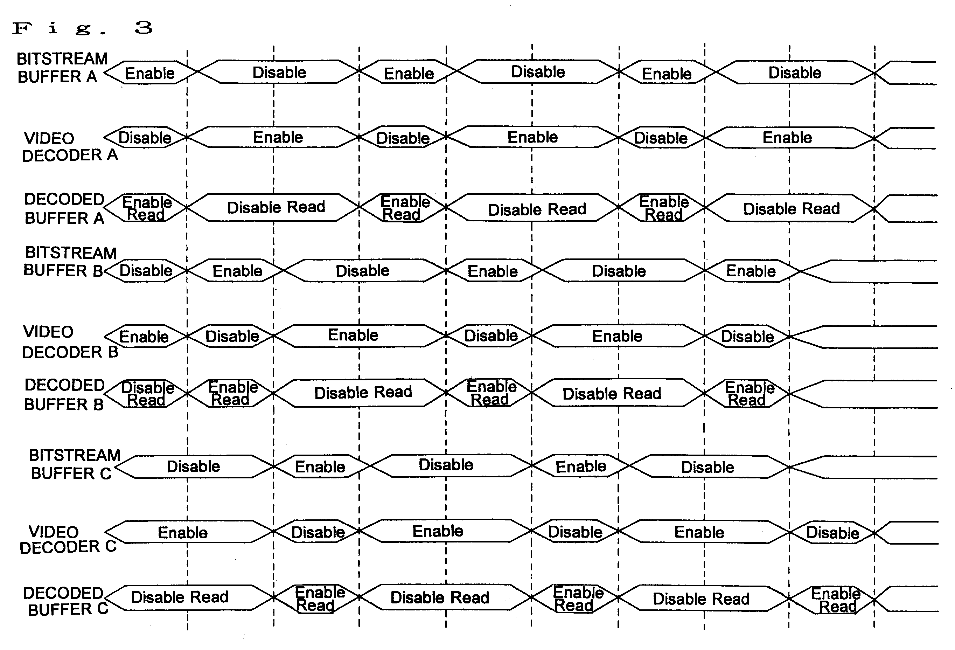

A flow diagram in Figure 2 shows the typical loop process of the synchronization control 4. The synchronization process begins by checking the GOP header as in step 18. Once the GOP header is detected, the FIFO memory 1 read is disabled as in step 19. The synchronization control then checks the current status of each decoder system 5, 9 13 as in steps 21, 23, 24. Figure 3 shows the status of the modules in the configuration of the synchronization loop. Each column separation indicates the detection of a GOP header. Some status controls changes every detection of a GOP header while others change every two GOP headers detected. The GOP detection and status change is synchronized with the vertical sync from the sync generator 3. The decoded buffers A, B, and C, as indicated by 8, 12 and 16, are read out only one at a time synchronized to the vertical sync and therefore provides a seamless sequence of decoded pictures.

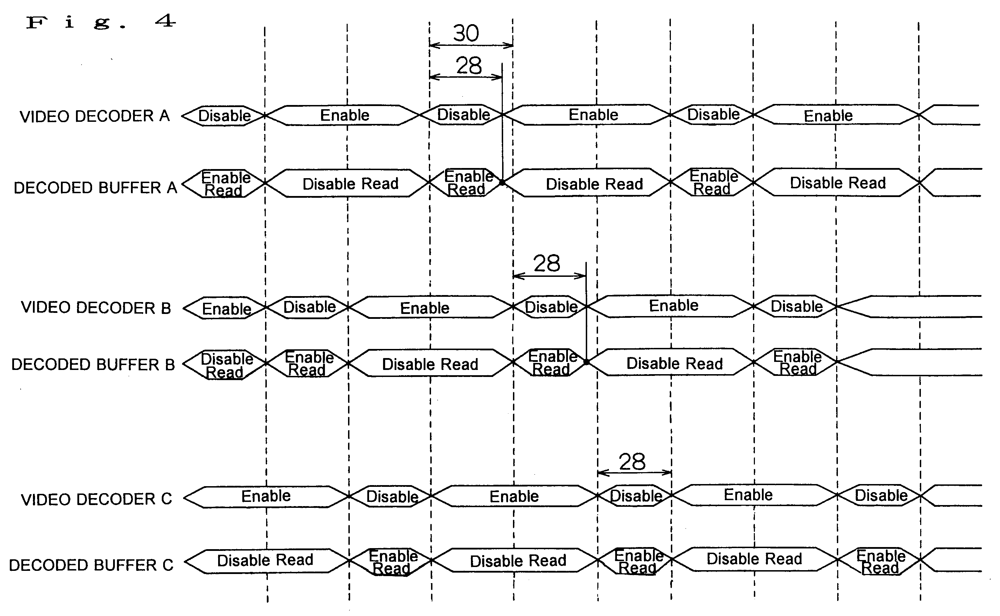

In the case, where at the start of a sequence the first GOP has less pictures than normal, for example 28 pictures, as compared to a normal 30 pictures GOP in the bitstream, some adjustments had to be made to phase lock the synchronized loop. This phase locking is required for the special GOP to prevent the audio and video output from drifting apart from each other and eventually be out of sync with each other after some time. For easier explanation, assume that the decoder A, 7, is decoding a 28 picture GOP. With reference to Figure 4, the video decoder A, 7, process decreased by two picture periods. By the next GOP detection, the decoded buffer A, 8, read and video decoder B, 11, enable period is also decreased by 2 picture periods. This process period decrement propagates down the buffers and decoders until all the modules had their processes decreased by two picture periods each as shown in Figure 4. When the decrement process is completed then the system is locked in synchronization again. Notice that there is a lull period after a decrement of the decoded buffer A, B and C, 8, 12 and 16. During the lull period there is no output to the display memory. When this happens, the display memory will repeat the last input picture and therefore prevent any display blanking from occurring.

The means of the above embodiments and the invention can be realized by a hardware ,for example ,logic circuit ,switching element , or software ,for example ,,computer .

As apparent from the above, by using a novel synchronization scheme in a multiple video decoders system, a high quality progressive video decoder which can decode at high speed and efficiently can be implemented. This allows for future improvements in display and decoding technology.

## Claims

1. A multiple-video-decoder system comprising:
memory means for buffering video bitstream received from a transmission channel;
header detection means, coupled to said memory means, for detecting header code in the said video bitstream;
synchronizing means, coupled to the said header detection means, for executing synchronizing of the bitstream, video vertical sync and display signal ;
multiple video decoding modules having a bitstream buffer, video decoder connected to the bitsstream buffer for reconstructing pictures from the video bitstream and decoded video output buffer connected to the video decoder;
transmitting means for multiplexing the input video bitstream from the memory buffer and transferring the multiplexed video bitstream into selected said bitstream buffer of the said multiple video decoders;
a display buffer coupled to the multiple decoded video output buffers.

2. A multiple-video-decoders system according to claim 1, wherein
the said synchronizing means executes controlling for :
selecting bitstream buffer by depending on the said header code and the video vertical sync;
enabling and disabling any of the video decoders;
reconstructing pictures by using video bitstream from the respective bitstream buffers by the video decoders;
storing the reconstructed pictures into decoded video output buffers;
multiplexing data output of the said decoded video output buffers to the display buffer for displaying purposes;
synchronizing the output of the display buffer with the decoding rate of the said multiple video decoders;

3. A medium storing program or programs which can execute the function or functions which are executed by said one or all of said means , wherein the medium can be read by a computer.
